(19) Europäisches Patentamt
European Patent Office
Office européen des brevets

(11) Veröffentlichungsnummer: **0 074 618**
**A1**

(12) # EUROPÄISCHE PATENTANMELDUNG

(21) Anmeldenummer: 82108304.5

(22) Anmeldetag: 09.09.82

(51) Int. Cl.³: C 08 G 59/04
C 08 G 59/64, D 21 H 3/48
C 10 M 3/26

(30) Priorität: 12.09.81 DE 3136281

(43) Veröffentlichungstag der Anmeldung: 23.03.83 Patentblatt 83/12

(84) Benannte Vertragsstaaten: AT DE FR GB IT NL

(71) Anmelder: HOECHST AKTIENGESELLSCHAFT
Postfach 80 03 20
D-6230 Frankfurt/Main 80(DE)

(72) Erfinder: Diery, Helmut, Dr.
Theresenstrasse 45
D-6233 Kelkheim (Taunus)(DE)

(72) Erfinder: Mees, Bernhard, Dr.
Crooked Oak Lane 4700
Charlotte North Carolina 28211(US)

(54) **Additionsprodukte aus Triäthanolaminkondensaten und Bis-glycidylethern und ihre Verwendung.**

(57) Additionsprodukte erhalten durch Umsetzung von Triäthanolaminkondensaten der Formal 1,

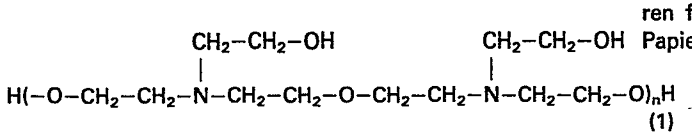
(1)

wobei n eine Zahl von 1 bis 3 bedeuten soll, mit Bisglycidylethern der Formel 2

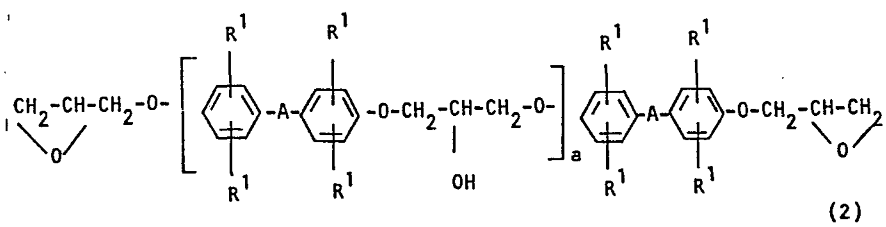
(2)

worin $R^1$ gleich oder verschieden sein können und Wasserstoff, $C_1$-$C_4$-Alkyl oder Halogen, insbesondere Chlor, A eine direkte Bindung, eine Sulfonyl- oder Cyclohexylgruppe oder eine Gruppe der Formel

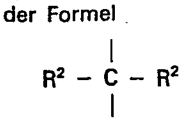

$R^2$ Wasserstoff, Methyl oder Phenyl und a eine ganze Zahl von 0 bis 10 bedeutet und deren Verwendung als Demulgatoren für Öl-Wasser-Emulsionen, als Schmierstoffe und als Papierhilfsmittel.

EP 0 074 618 A1

HOECHST AKTIENGESELLSCHAFT HOE 81/F 245 0074618

Additionsprodukte aus Triäthanolaminkondensaten und Bis-glycidylethern und ihre Verwendung

Es ist bekannt, daß Triäthanolamin mit gutem Erfolg bei Formulierungen auf dem Reinigungssektor wie auch auf dem Korrosionsschutzgebiet eingesetzt wird. Ebenso ist bekannt, daß man Triäthanolamin in Gegenwart von katalytischen Mengen von Lewissäuren, wie z.B. $ZnCl_2$, unter Abspaltung von Wasser mit sich selbst kondensieren kann. Man erhält so bei einer Abspaltung von bis zu 1 Mol Wasser pro Mol Triäthanolamin eine hochviskose Paste, die noch in Wasser löslich ist und in Wasser ebenfalls hochviskose Lösungen bildet. Trotz dieser hohen Viskosität ist der Kondensationsgrad und das damit erreichte Molgewicht relativ niedrig. Das Molgewicht liegt nach diesem Verfahren bei ca. 650-750. Produkte dieser Art zeigen eine gewisse Wirkung auf den Gebieten der Papierveredlung, bei der Spaltung von Öl in Wasser-Emulsionen sowie bei Schmiermitteln. Nachteilig für die genannten Anwendungsgebiete ist jedoch das noch zu geringe Molgewicht der Triäthanolaminkondensate. Versucht man die Kondensation über das angegebene Maß von 1 Mol Wasser pro Mol Triäthanolamin hinaus zu steigern, so durchläuft das Reaktionsprodukt eine extrem zähe Gelphase, die technisch nicht mehr beherrschbar ist, und man erhält ein in Wasser völlig unlösliches Polykondensat.

Diese Befunde zeigen, daß es technisch nicht möglich ist, durch direkte Weiterkondensation zu Triäthanolaminkondensaten mit höherem Molekulargewicht und größeren anwendungstechnischen Möglichkeiten zu gelangen.

Es wurde nun gefunden, daß man zu technisch wertvollen Kondensaten mit höherem Molekulargewicht kommt, wenn man die Triäthanolaminkondensate mit Bis-glycidylethern umsetzt.

Gegenstand der Erfindung sind somit Additionsprodukte erhalten durch Umsetzung von Triäthanolaminkondensaten der Formel 1,

$$H\left(-O-CH_2-CH_2-\underset{}{\overset{CH_2-CH_2-OH}{\overset{|}{N}}}-CH_2-CH_2-O-CH_2-CH_2-\overset{CH_2-CH_2-OH}{\overset{|}{N}}-CH_2-CH_2-O\right)_n H$$

wobei n eine Zahl von 1 **bis** 3 bedeuten soll, mit Bisglycidylethern der Formel 2,

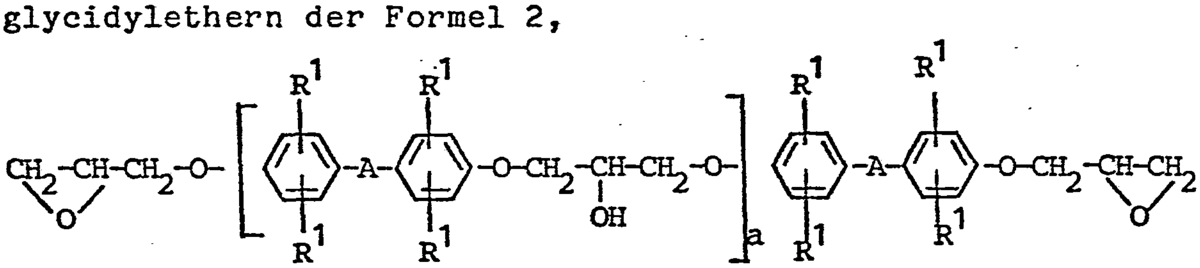

(2)

worin $R^1$ gleich oder verschieden sein können und Wasserstoff, $C_1$-$C_4$-Alkyl oder Halogen, insbesondere Chlor, A eine direkte Bindung, eine Sulfonyl- oder Cyclohexylgruppe oder eine Gruppe der Formel

$$R^2 - \overset{|}{\underset{|}{C}} - R^2$$

$R^2$ Wasserstoff, Methyl oder Phenyl und a eine ganze Zahl von 0 bis 10 bedeutet.

Als Triäthanolaminkondensate werden solche Produkte eingesetzt, die in Wasser noch völlig klar löslich sind. Die Viskosität einer 40 %igen, wäßrigen Lösung sollte zwischen 30 - 1500 mPas liegen, vorzugsweise zwischen 100 - 1000 mPas (gemessen in einem Kugelfallviskosimeter). Die Kondensation selbst wird in an sich bekannter Weise durch saure Katalyse bei Temperaturen zwischen 180° - 230°C durchgeführt, wobei es sich empfiehlt, das Reaktionswasser mittels eines Stickstoffstromes abzudestillieren.

Die Bis-glycidylether gewinnt man in bekannter Weise aus den entsprechenden Bis-phenolen. Hierfür kommen unter

anderem folgende Bis-phenole in Frage: Bis-(4-hydroxyphenyl)-methan, Bis-(4-hydroxy-3-methylphenyl)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3,5-dichlorphenyl)-propan, Bis-(4-hydroxyphenyl)-phenylmethan, Bis-(4-hydroxyphenyl)-diphenylmethan, 1,1-Bis-(4-hydroxyphenyl)-cyclohexan, 4,4'-Dihydroxydiphenyl, 4,4'-Dihydroxydiphenylsulfon.

Darüber hinaus kommen als Bis-glycidylether auch Epoxydharze in Frage gemäß der oben angegebenen Formel.

Die Umsetzung der Triäthanolaminkondensate mit den Bisglycidylethern verläuft bei Temperaturen zwischen 70-160°C, vorzugsweise zwischen 80-120°C. Die Reaktion erfolgt im allgemeinen ohne Lösungsmittel, doch ist es auch möglich, die Reaktion in einem geeigneten Lösungsmittel durchzuführen. Das ist vorallem dann angebracht, wenn die Viskosität der Reaktanten und des Endproduktes in unverdünntem Zustand zu hoch ist.

Das Molverhältnis des Triäthanolaminkondensates zum Bisepoxid liegt bei 1 : 0,5 bis 1: 0,05, wobei die Obergrenze des Bisepoxideinsatzes abhängig ist von der Viskosität und damit dem Molgewicht des eingesetzten Kondensates. Je höher das Molgewicht des Kondensates ist, desto niedriger sollte die zugesetzte Menge an Epoxid sein, da man sonst durch Vernetzungsreaktionen gelartige, nicht mehr wasserlösliche Endprodukte erhält.

Das eingesetzte Bisepoxid kann entweder direkt oder in mehreren Portionen zugesetzt, oder, wenn es flüssig ist, kontinuierlich während der Reaktionszeit zugetropft werden. Ein zusätzlicher Katalysator ist für die Umsetzung nicht erforderlich und die Reaktionszeit hängt ab von der Reaktionstemperatur. Die Umsetzung wird solange durchgeführt, bis eine Epoxid-Zahl von kleiner als 2 erreicht ist.

Die so erhaltenen Produkte eignen sich sehr gut als Spalter von Emulsionen aus Wasser und Öl, als Schmierstoffe von Maschinenteilen sowie als Papierhilfsmittel.

Die folgenden Beispiele sollen die Erfindung erläutern,, ohne sie jedoch einzuschränken.

Beispiel 1

298 Gewichtsteile Triäthanolamin werden zusammen mit 3 Gewichtsteilen gepulvertem Zinkchlorid in einen 1 Liter Vierhalskolben mit Rührer, Thermometer und Kurzwegdestillationsaufsatz gegeben und anschließend unter Rühren bis auf 230°C geheizt. Durch Überleiten eines leichten Stickstoffstromes wird das entstehende Reaktionswasser über den Kurzwegdestillationsaufsatz abgetrennt. Man läßt solange reagieren, bis etwa 35,5 g Destillat abgeschieden ist (ca. 5 Stunden). Das Produkt ist noch wasserlöslich und hat direkt gemessen (d.h. ohne Verdünnung in Wasser) eine Viskosität von 32 Pas bei Raumtemperatur.

In dieses Kondensat gibt man über einen Tropftrichter im Verlauf von 1 Stunde bei 100°C 30 Gewichtsteile des Bisglycidylethers vom Bisphenol A mit einem Molgewicht von 384 und läßt noch 2 Stunden bei dieser Temperatur nachrühren. Die Epoxidzahl sollte dann bei etwa 2 liegen. Das Endprodukt zeigt als 40 %ige, wäßrige Lösung eine Viskosität von 40 mPas und ist völlig homogen.

Beispiel 2

298 Gewichtsteile Triäthanolamin werden wie in Beispiel 1 beschrieben solange kondensiert, bis eine Probe im unverdünnten Zustand eine Viskosität von 66 Pas zeigt (bei Raumtemperatur).

Anschließend gibt man bei 50°C 10 Gewichtsteile des im Beispiel 1 genannten Bisglycidylethers von Bisphenol A und

heizt innerhalb von 30 min. auf 100°C. Danach hält man unter Rühren noch 2 Stunden bei dieser Temperatur. Man erhält eine gut gießbare, braune Flüssigkeit mit einer Viskosität von 1350 mPas, wenn man sie mit Wasser auf 40 Gew.-% verdünnt.

Beispiel 3

Man stellt gemäß Beispiel 1 ein Triäthanolaminkondensat mit einer Viskosität von 66 Pas her. Das sehr viskose Produkt wird mit 60 Gewichtsteilen Methoxybutanol verdünnt und man gibt bei Raumtemperatur 8 Gewichtsteile eines Epoxidharzes der Formel 2 (A= $CH_3-\overset{|}{\underset{|}{C}}-CH_3$, a = 5-6) Epoxidzahl 39) zu. Anschließend hält man 4 Stunden in einem Druckgefäß unter Rühren bei 105-110°C und kühlt dann wieder auf Raumtemperatur ab. Nach Zugabe von 200 Gewichtsteilen Wasser destilliert man das Methoxybutanol ab und erhält nach Einstellen des Kondensates mit Wasser auf 40 Gew.-% eine braune Flüssigkeit mit einer Viskosität von 1500 mPas.

Beispiel 4

260 Gewichtsteile eines Triäthanolaminvorkondensates gem. Beispiel 1 mit einer Viskosität von 32 Pas werden mit 38 Gewichtsteilen des Bisglycidyläthers von 2,2-Bis(4-hydroxy-phenyl)-propan versetzt und 6 Stunden bei 70°C gerührt. Die Epoxidzahl ist dann auf 3-2 abgesunken und der Ansatz wird mit Wasser auf 40 Gew.-% Wirksubstanz eingestellt. Die Viskosität dieser Einstellung liegt bei 100 mPas.

Beispiel 5

298 Gewichtsteile Triäthanolamin werden mit 3 Gewichtsteilen Zinkchlorid bei 230°C bis zu einer Viskosität von 20 Pas bei 20°C kondensiert. Anschließend versetzt man mit 35 Gewichtsteilen des Bisglycidyläthers vom 4,4'-Dihydroxydiphenylsulfon und vernetzt 4 Stunden bei 110°C. Das Endprodukt hat als 40 %ige wäßrige Einstellung eine Viskosität von 500 mPas.

PATENTANSPRÜCHE:

1. Additionsprodukte erhalten durch Umsetzung von Triäthanolaminkondensaten der Formel 1,

(1)

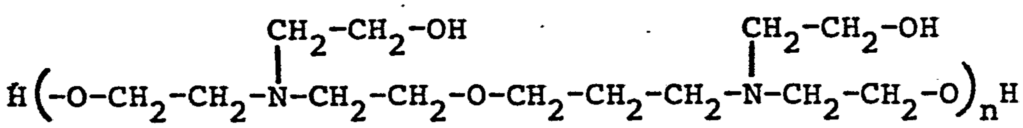

wobei n eine Zahl von 1 bis 3 bedeuten soll, mit Bisglycidylethern der Formel 2

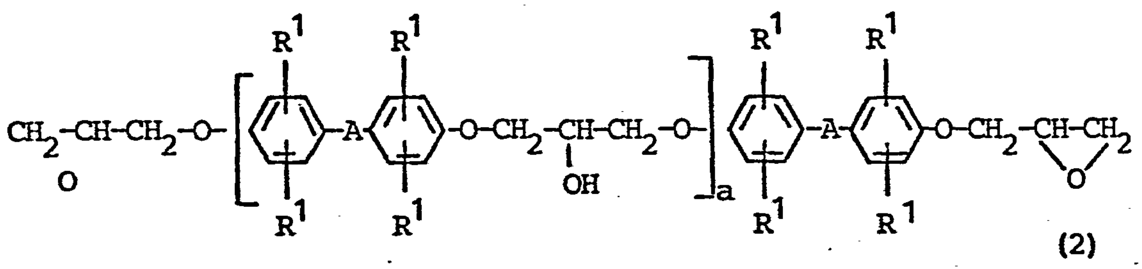

(2)

worin $R^1$ gleich oder verschieden sein können und Wasserstoff, $C_1$-$C_4$-Alkyl oder Halogen, insbesondere Chlor, A eine direkte Bindung, eine Sulfonyl- oder Cyclohexylgruppe oder eine Gruppe der Formel

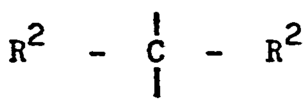

$R^2$ Wasserstoff, Methyl oder Phenyl und a eine ganze Zahl von 0 bis 10 bedeutet.

2. Verwendung der Additionsprodukte nach Anspruch 1 als Demulgatoren von Öl-Wasser-Emulsionen, als Schmierstoffe und als Papierhilfsmittel.

Europäisches Patentamt

# EUROPÄISCHER RECHERCHENBERICHT

0074618
Nummer der Anmeldung

EP 82 10 8304

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | |
| A | US-A-3 511 882 (VIRGIL L. SEALE et al.) * Spalte 2, Zeilen 10-21 * | 1,2 | C 08 G 59/04<br>C 08 G 59/64<br>D 21 H 3/48<br>C 10 M 3/26 |
| | --- | | |
| A | US-A-3 078 271 (MELVIN DE GROOTE et al.) * Anspruch * | 1,2 | |
| | ----- | | |

RECHERCHIERTE SACHGEBIETE (Int. Cl. 3)

C 08 G
C 10 G
E 21 B
D 21 H

Der vorliegende Recherchenbericht wurde für alle Patentansprüche erstellt.

| Recherchenort | Abschlußdatum der Recherche | Prüfer |
|---|---|---|
| DEN HAAG | 16-12-1982 | MALHERBE Y.J.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument